# EUROPÄISCHE PATENTSCHRIFT

(11) **EP 0 433 847 B1**
(45) Veröffentlichungstag und Bekanntmachung des Hinweises auf die Patenterteilung: **06.03.1996**
(21) Anmeldenummer: 90123799.0
(22) Anmeldetag: 11.12.1990
(51) Int. Cl.: G09B 3/04

(54) **Vorrichtung zum Differenzierungstraining**
Device for differentiation training
Dispositif pour l'entraînement de différenciation

(30) Priorität: 18.12.1989 DE 8914825 U
(43) Veröffentlichungstag der Anmeldung: 26.06.1991
(73) Patentinhaber: VERLAG SIGRID PERSEN, D-21637 Horneburg (DE)
(72) Erfinder: Müller, Heiner, D-2152 Horneburg (DE)
(74) Vertreter: Schmidt-Bogatzky, Jürgen, Dr. Ing. Huth, Dietrich & Partner

(56) Entgegenhaltungen:
- EP-A- 0 001 430
- WO-A-82/00828
- DE-A- 1 772 212
- DE-A- 2 656 777
- FR-A- 2 008 165
- US-A- 4 021 937
- US-A- 4 838 791

## Beschreibung

Die Erfindung betrifft eine Vorrichtung zum Differenzierungstraining durch Zuordnung numerischer, alphanumerischer, Wort- und/oder bildhafter Symbole, die auf mindestens einer Fläche eines als Karte aus Kunststoff, Karton oder einer metallischen Folie ausgebildeten flächigen Zuschnitts in durch ein Farblinienraster ausgebildeten Feldern durch Druck oder Beschichtung angeordnet sind, mit mindestens einem an ein Symbol angepaßten Klemmglied, das jeweils ein Feld der einen Fläche mit einem Feld der anderen Fläche logisch verbindet.

Es ist bekannt, bei kartenförmigen Zuschnitten von Vorrichtungen der beschriebenen Art Durchbrechungen im Bereich der Symbolträgerfelder vorzusehen, in die stöpselartige Klemmglieder als Symbolträger und Markierungshilfe eingesteckt werden können. Hierbei besteht der Nachteil, daß die Wandungen der Durchbrechungen sich durch Gebrauch verformen und deshalb ein fester Halt der Klemmglieder nicht mehr gewährleistet ist.

Die Aufgabe der Erfindung besteht darin, eine Vorrichtung der eingangs genannten Art so auszubilden, daß beim Gebrauch Nachteile durch nicht mehr sicher befestigbare Klemmglieder vermieden werden.

Erfindungsgemäß erfolgt die Lösung der Aufgabe durch die kennzeichnenden Merkmale des Anspruch 1. Vorteilhafte Ausgestaltungen der Erfindung werden in den abhängigen Ansprüchen beschrieben.

Die Erfindung wird nachstehend anhand des in den Zeichnungen schematisch dargestellten Ausführungsbeispiels näher erläutert. Es zeigt:
**Fig. 1** eine Vorrichtung in einer Ansicht von vorn,
**Fig. 2** die Vorrichtung nach Fig. 1 in einer Ansicht von hinten,
**Fig. 3 bis 5** weitere Ausbildungen einer Vorrichtung in einer Ansicht von vorn.
**Fig. 6a bis 6c** die Ausbildung von Klemmgliedern in schematischen Seitenansichten.

Die Vorrichtung 1 besteht aus einem als Karte 2 ausgebildeten flächigen Zuschnitt 3 aus einem Kunststoff, Karton oder dergleichen. Auf der einen Fläche 4 des Zuschnitts 3 ist eine aus Feldern 6 gebildete Feldanordnung 8 vorgesehen, die durch ein Farblinienraster 13 gebildet ist. Oberhalb der Feldanordnung 8 sind Felder 7 vorgesehen, die ebenfalls durch ein Farblinienraster 13 gebildet sind. In den Feldern 7 sowie den Feldern 6 sind Symbole 12 vorgesehen. Die Symbole 12 der Felder 6 sind als Wortsymbole ausgebildet. Die Symbole 12 der Felder 7 bestehen aus einem Bildsymbol und einem numerischen Zeichen. Das Bildsymbol ist als Kreis ausgebildet, wobei die Kreise der einzelnen Felder 7 zur Unterscheidung durch Aufdruck oder Beschichtung unterschiedlich farblich angelegt sind. Die Kreise können auch farblich neutral ausgebildet sein und dann nachträglich mit einem Farbstift oder einem Pinsel in der gewünschten Farbe ausgelegt werden.

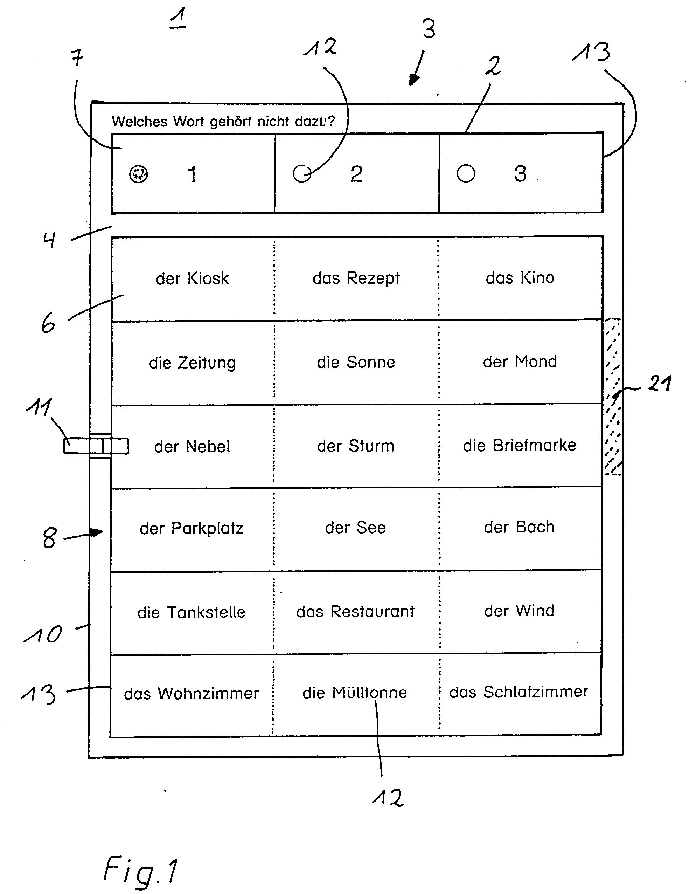

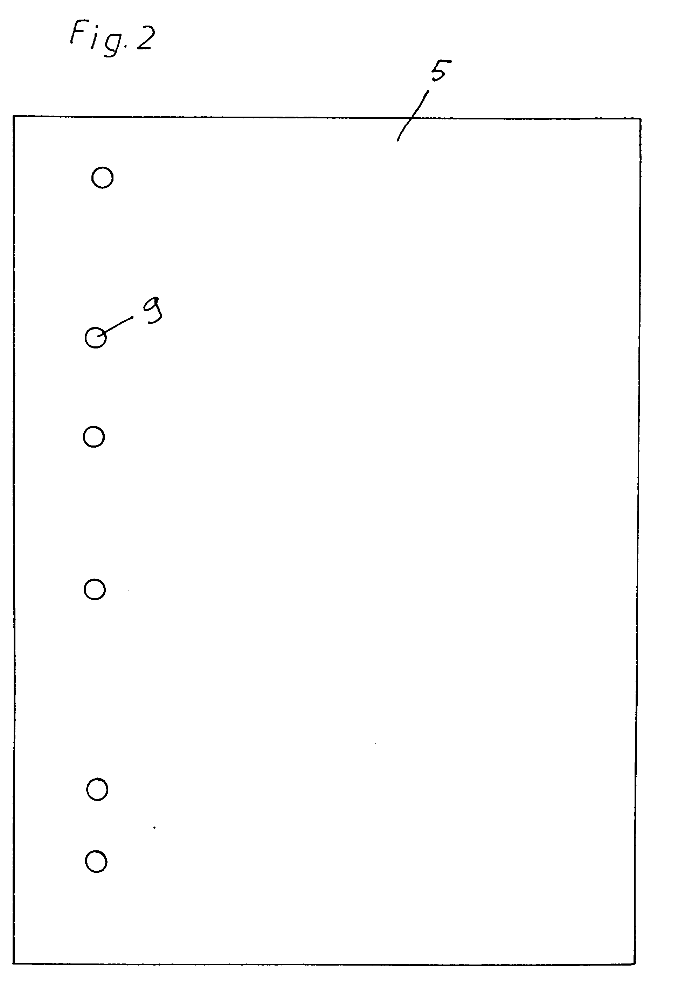

An mindestens einem Kartenrand 10 der Karte 2 können Klammern 11 als Klemmglieder lösbar befestigt werden. In Fig. 1 ist eine derartige Klammer 11 schematisch dargestellt. Diese Klammern sind farblich wie die Kreise der Symbole 12 in den Feldern 7 ausgebildet. Auf der anderen Fläche 5 der Karte 2 sind den Zeilen der Felder 6 zugeordnet jeweils Felder 9 angeordnet, die mit dem zur entsprechenden Zeile der Felder 6 gehörenden Feld 7 übereinstimmen (Fig. 2). Hierdurch ist leicht festzustellen, ob bei dieser Vorrichtung 1 vom Benutzer das angestrebte Lesen in Wortfeldern geleistet wurde.

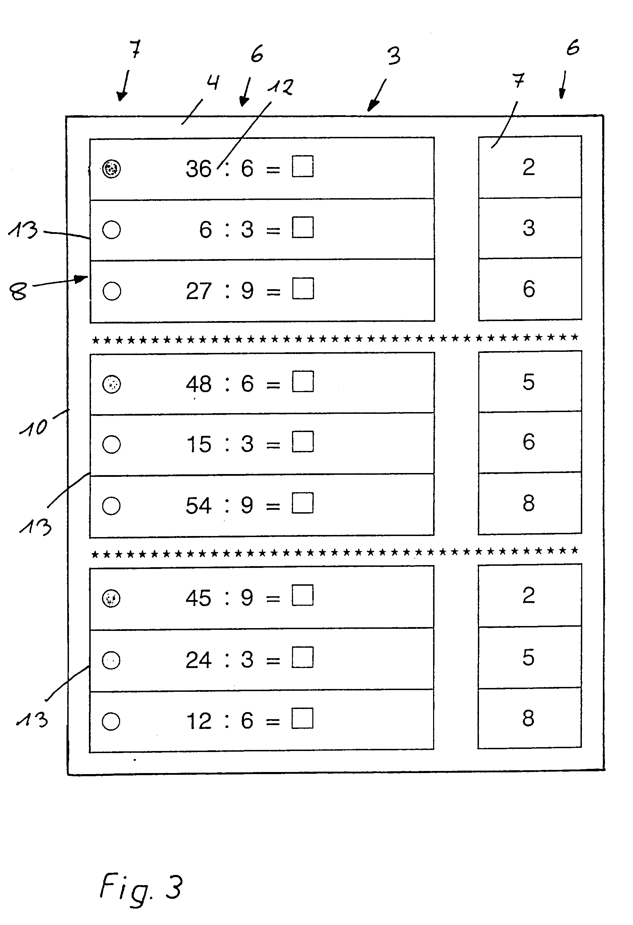

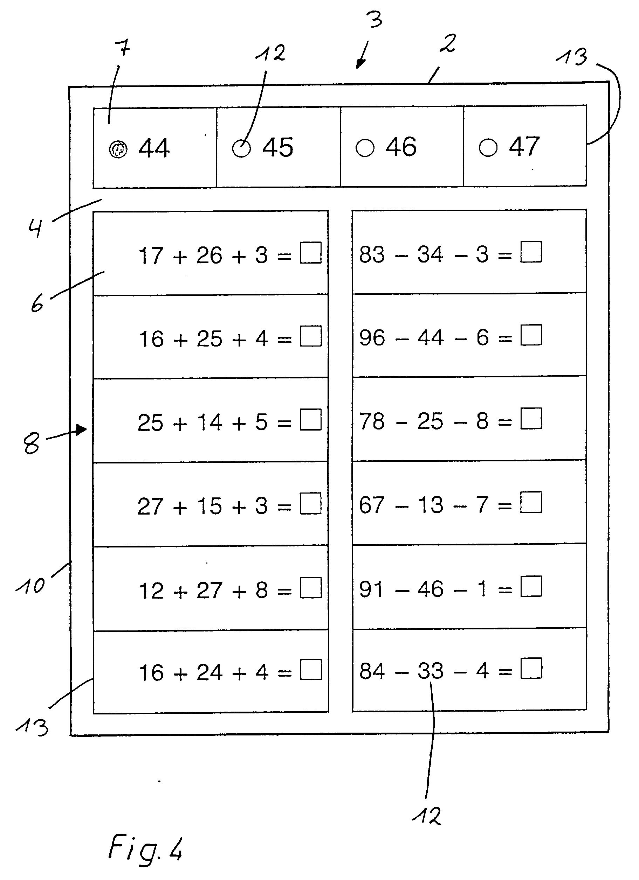

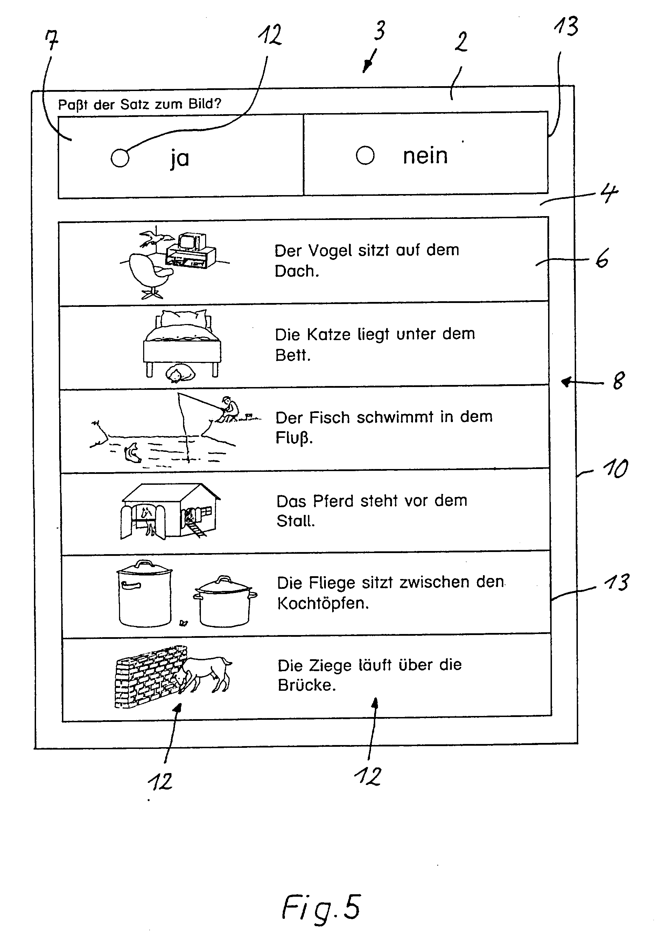

Es ist auch möglich, die Felder 7 in die Felder 6 zu integrieren, wie es bei der Vorrichtung 1 nach Fig. 3 dargestellt ist. Die Symbole 12 können als numerische, alphanumerische, Wort- und/oder Bild-Symbole ausgebildet sein. Die Felder 6 und Felder 7 können hierbei unterschiedlich angeordnet sein, wie es ein Vergleich der auf den Figuren 1, 3 und 4 dargestellten Vorrichtungen 1 zeigt. Fig. 5 zeigt eine Variante einer Vorrichtung 1, die ebenfalls zum Lesen in Wortfeldern dient. Hierbei weisen die Felder 6 Wort- und Bildzeichen auf.

Die Felder können zeilenförmig oder vertikal in die Feldanordnung 8 integriert oder aber auch sowohl oberhalb wie auch unterhalb der Feldanordnung 8 ausgebildet werden.

Die beschriebenen Vorrichtungen sind ein ideales Lernmittel zum Differenzierungstraining, das mit relativ geringem Aufwand für einen Unterricht aufbereitet werden kann. Die Kreise auf den Karten 2 können in unterschiedlichen Farben angelegt werden. Hierbei sind die Farben so zu wählen, daß auch farbunsichere oder farbblinde Personen die Farben eindeutig unterscheiden können. Zur Lösung der entsprechenden Aufgabe muß eine Klammer 11 jeweils in der entsprechenden Farbe an die Aufgabe bzw. Lösung angeklammert werden. Danach wird die Karte 2 umgedreht und neben die Klammer ein kleiner Kreis in der gleichen Farbe wie die Klammer gemalt. Sofern eine farbliche Übereinstimmung der Kennzeichnung mit dem jeweiligen Entscheidungssymbolfeld 9 vorliegt, ist die Lösung richtig. Andernfalls muß der Vorgang wiederholt werden.

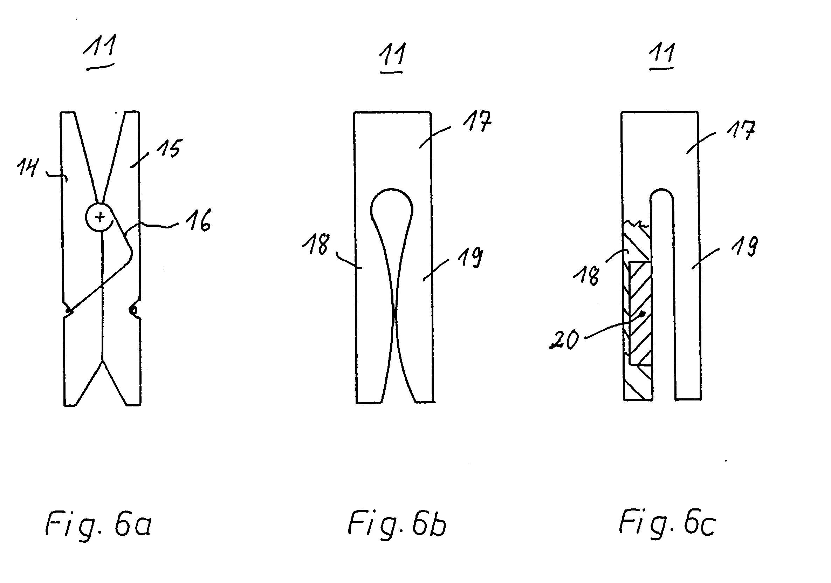

Die Klammern 11 können unterschiedlich ausgebildet sein. So ist es möglich, jede Klammer 1 aus zwei mittels einer Feder 16 zusammenpressbaren Klammerhälften 14, 15 auszubilden. Im Ruhezustand sind die Klammerhälften 14, 15 an einem Endabschnitt durch die Federkraft aufeinander gepreßt. Es ist auch möglich, die Klammer 11 gemäß Fig. 6b auszubilden. Hierbei sind an einem Grundkörper 17 Stege 18, 19 ausgebildet, die federnd elastisch aneinander liegen. Bei Bedarf kann zwischen die Federn 18, 19 jeweils die gewünschte Karte 2 geschoben werden. Es ist aber auch möglich, in mindestens einen der Stege 18, 19 einen Permanentmagneten 20 zu integrieren (Fig. 6c). Diese Ausführung einer Klammer 11 eignet sich für solche Karten 2, deren Zuschnitt 3 aus einer metallischen Folie oder dünnen Platte besteht, an der Magneten haften können.

Um den Kartenrand 10 der Karte 2 vor Abnutzung zu schützen, kann am Kartenrand 10 eine Versteifungsfolie 11 vorgesehen werden, wie es in Fig. 1 im Ausschnitt durch Strichlinien angedeutet ist. Die Versteifungsfolie 11 kann z. B. eine Buchhaut sein und umgreift den Kartenrand 10. Auf den randseitigen Abschnitten der Flächen 4, 5 liegt die Versteifungsfolie 11 durch z. B. Klebverbindung fest auf.

Zur besseren Handhabung können die Karten 2 auch z. B. in eine Steckleiste gesteckt werden. Um die Stabilität zu erhöhen, ist es auch möglich, z. B. einen Pappstreifen hinter die Karte 2 zu stecken.

## Patentansprüche

1. Vorrichtung zum Differenzierungstraining durch Zuordnung numerischer, alphanumerischer, Wort- und/oder bildhafter Symbole (12), die auf mindestens einer Fläche eines als Karte (2) aus Kunststoff, Karton oder einer metallischen Folie ausgebildeten flächigen Zuschnitts (3) in durch ein Farblinienraster ausgebildeten Feldern durch Druck oder Beschichtung angeordnet sind, mit mindestens einem an ein Symbol (12) angepaßten Klemmglied, das jeweils ein Feld der einen Fläche (4) mit einem Feld der anderen Fläche (5) logisch verbindet, dadurch gekennzeichnet, daß das mindestens eine Klemmglied als Klammer (11) ausgebildet ist, die an einem Kartenrand (10) lösbar angeordnet ist.

2. Vorrichtung nach Anspruch 1, dadurch gekennzeichnet, daß die Klammer (11) aus zwei mittels einer Feder (16) an einem Endabschnitt der Klammer (11) aufeinander preßbaren und um ein Gelenk drehbaren Klammerhälften (14, 15) besteht.

3. Vorrichtung nach Anspruch 1, dadurch gekennzeichnet, daß die Klammer (11) durch zwei an einem Grundkörper (17) ausgebildete Stege (18, 19) gebildet ist, die federnd elastisch aneinander liegen.

4. Vorrichtung nach Anspruch 1, dadurch gekennzeichnet, daß die Klammer (1) durch zwei an einem Grundkörper (17) ausgebildeten im Abstand voneinander angeordneten Stege (18, 19) gebildet ist, von denen mindestens ein Steg (18) einen Permanentmagneten aufweist.

5. Vorrichtung nach Anspruch 1 bis 4, dadurch gekennzeichnet, daß am Kartenrand (10) eine Versteifungsfolie (21) angeordnet ist, die den Kartenrand (10) umgreift und auf beiden Flächen (4, 5) randseitig aufliegt.

6. Vorrichtung nach Anspruch 5, dadurch gekennzeichnet, daß die Versteifungsfolie (21) auf den randseitigen Abschnitten der Flächen (4, 5) aufgeklebt ist.

7. Vorrichtung nach Anspruch 5 und 6, dadurch gekennzeichnet, daß die Versteifungsfolie (21) eine Buchhaut ist.

## Claims

1. Device used for teaching differentiation by coordinating numerical, alpha-numerical, word and/or picture symbols (12), arranged in squares separated by a grid of coloured lines printed or applied as a layer on at least one surface of a card (2) made from a design (3) cut from plastics material, cardboard or a metal sheet, with at least one clamping member designed to clip onto a symbol that logically connects a field on one surface (4) with a field on the other surface (5), characterised in that at least one clamping member is designed as a clip (11) which is detachably arranged on an edge of the card (10).

2. Device as claimed in claim 1, characterised in that the clip (11) consists of two hinged clamping halves (14, 15) that can be pressed together by means of a spring (16) on one end portion of the clamp (11).

3. Device as claimed in claim 1, characterised in that the clip (11) is formed by two legs (18, 19) on a body (17), which lie adjacent to each other and are elastically bendable.

4. Device as claimed in claim 1, characterised in that the clip (11) is formed by two legs (18, 19) arranged at a distance apart from each other on a body (17), at least one of these legs (18) having a permanent magnet.

5. Device as claimed in claims 1 to 4, characterised in that a stiffening sheet (21) is arranged on the edge (10) of the card, which grips the edge of the card and lies around the periphery of both surfaces (4, 5).

6. Device as claimed in claim 5, characterised in that the stiffening sheet (21) is bonded onto the peripheral portions of the surfaces (4, 5).

7. Device as claimed in claims 5 and 6, characterised in that the stiffening sheet (21) is a book cover

## Revendications

1. Dispositif pour l'entraînement à la différenciation par attribution de symboles numériques, alphanumériques, de symboles de mots et/ou imagés (12) qui sont disposés par pression ou couchage sur au moins une surface d'une coupe (3) plane se présentant sous la forme d'une carte (2) en matière synthétique , en carton ou d'une feuille métallique, dans des champs formés par une quadrillage de lignes de couleur, avec au moins un membre de serrage adapté à un symbole (12) et qui relie à chaque fois logiquement un champ d'une surface (4) à un champ de l'autre surface (5), caractérisé en ce qu'au moins l'un des membres de serrage se présente sous la forme d'une agrafe (11) qui est disposée de façon amovible sur un bord de carte (10).

2. Dispositif selon la revendication 1, caractérisé en ce que l'agrafe (11) se compose de deux moitiés d'agrafe (14, 15) qui peuvent être pressées l'une sur l'autre contre une section terminale de l'agrafe (11) au moyen d'un ressort (16) et pivoter autour d'une articulation.

3. Dispositif selon la revendication 1, caractérisé en ce que l'agrafe (11) est constituée par deux traverses (18, 19) conçues sur un corps de base (17) et contigües entre elles en étant montées sur ressorts.

4. Dispositif selon la revendication 1, caractérisée en ce que l'agrafe (11) est constituée par deux traverses (18, 19) conçues sur un corps de base (17), disposées avec un écartement entre elles et dont au moins l'une (18) présente un aimant permanent.

5. Dispositif selon les revendications 1 à 4, caractérisé en ce qu'une feuille de renfort (21) qui enveloppe le bord de la carte (10) et repose du côté du bord sur les deux surfaces (4, 5) est disposée au bord de la carte (10).

6. Dispositif selon la revendication 5, caractérisé en ce que la feuille de renfort (21) est collée sur les sections marginales des surfaces (4, 5).

7. Dispositif selon les revendications 5 et 6, caractérisé en ce que la feuille de renfort (21) est une peau de livre.
